**Europäisches Patentamt**

**European Patent Office**

**Office européen des brevets**

(19)

(11) **EP 0 979 012 A1**

(12) **DEMANDE DE BREVET EUROPEEN**

(43) Date de publication:
**09.02.2000 Bulletin 2000/06**

(51) Int Cl.$^7$: **H04Q 3/66**, H04Q 3/62

(21) Numéro de dépôt: **99401667.3**

(22) Date de dépôt: **05.07.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **06.08.1998 FR 9810129**

(71) Demandeur: **ALCATEL**
**75008 Paris (FR)**

(72) Inventeurs:
• **Phan, Cao Thanhn**
**92500 Rueil Malmaison (FR)**
• **Litteaut, Jacques**
**78160 Marly Le Roi (FR)**

(74) Mandataire: **Sciaux, Edmond et al**
**COMPAGNIE FINANCIERE ALCATEL**
**Dépt. Propr. Industrielle,**
**30, avenue Kléber**
**75116 Paris (FR)**

(54) **Routage des appels avec débordements dans un réseau privé**

(57) L'invention concerne un procédé de routage d'un appel dans un réseau privé (1, 2 ,3 4, 5, 6), avec débordement vers un réseau public (8), comprenant le calcul des différents routes permettant d'établir l'appel, avec un ou plusieurs débordements vers le réseau public, et le choix d'une route en fonction du coût des débordements et du nombre de débordements.

L'invention permet ainsi de minimiser le coût des débordements et de maximiser l'utilisation des ressources du réseau privé; la prise en compte du nombre de débordements permet de limiter la durée nécessaire à l'établissement de l'appel.

FIG_4

EP 0 979 012 A1

**Description**

La présente invention a pour objet un procédé de routage d'un appel dans un réseau privé, avec débordement vers un réseau public ou un autre réseau.

L'invention concerne les réseaux privés de télécommunications. De tels réseaux sont formés de noeuds de communication, reliés entre eux par des arcs ou artères acheminant les communications et/ou la signalisation.

L'algorithme de Dijkstra est décrit dans les ouvrages d'algorithmique, et est connu pour trouver dans un graphe un plus court chemin entre deux noeuds. Cet algorithme est le suivant : on considère un graphe G de N noeuds, qui est valué, i. e. dont chaque trajet existant entre deux noeuds i et j est affecté d'une valuation ou poids $l(i, j)$. On considère s un noeud de départ du graphe G, d un noeud d'arrivée, et on cherche un chemin minimisant $\pi (s, d)$, la distance de s à d, i. e. la somme des valuations des arcs reliant s à d. On note S le sous-graphe de G formé des noeuds x pour lesquels on connaît le chemin minimal vers s, et $\bar{S}$ son complémentaire. On note en outre $\Gamma_i$ l'ensemble des noeuds voisins d'un noeud i donné.

Au départ, le sous-graphe S ne contient que le noeud s, et $\bar{S}$ contient l'ensemble des autres noeuds, affecté des valeurs initiales suivantes:

$\pi (s, i) = l(s, i)$ pour $i \in \Gamma_s$, le noeud parent étant s;
$\pi (s, d) = \infty$, pour les autres noeuds, qui n'ont pas de noeud parent.

Une itération de l'algorithme s'effectue de la façon suivant.

Si $\bar{S}$ est vide, ou s'il ne contient que des noeuds i avec $\pi (s, i) = \infty$, on a terminé.

Sinon, on considère le noeud n de $\bar{S}$ qui est le plus proche du noeud de départ, i. e. le noeud qui minimise $\pi (s, i)$, $i \in \bar{S}$ on prend ce noeud et on l'enlève de $\bar{S}$ pour le mettre dans S.

Ensuite, on considère les voisins de ce noeud n et on calcule

$$\pi (s, n) + l(n, j), j \in \Gamma_n \text{ et } j \in \bar{S} \ ;$$

Si cette quantité est inférieure à $\pi (s, j)$, on met à jour $\pi (s, j)$:

$$\pi (s, j) := \pi (s, n) + l(n, j)$$

et on met aussi à jour le noeud parent de j, qui devient n.

On procède à cette opération pour tous les noeuds de $\Gamma_n$, puis on réordonne $\bar{S}$.

De la sorte, on ajoute progressivement à S l'ensemble des noeuds du graphe, en procédant par longueur croissante des chemins. Si on recherche un chemin vers un noeud d donné, l'algorithme peut être interrompu avant la fin, dès lors que le noeud de destination a été ajouté dans le sous graphe S.

L'algorithme se démontre par l'absurde de la façon suivante. On considère n le noeud le plus proche de $\bar{S}$, qui doit être ajouté à S. S'il existe un chemin le plus proche, ce chemin part de s et arrive à n, et présente un premier noeud dans $\bar{S}$, noté m. On a alors

$$\pi (s, m) + \pi (m, n) < \pi (s, n)$$

et puisque $\pi (m, n)$ est positif ou nul,

$$\pi (s, m) < p(s, n)$$

ce qui est contraire à l'hypothèse. Il est clair par ailleurs que $\pi (s, m)$ a été calculé dans une itération précédente, lors de l'ajout dans S du parent de m.

J. Eldin et K. P. Lathia, Le RNIS appliqué au Centrex et au réseaux privés virtuels contient une description des réseaux privés physiques et des réseaux privés virtuels. Comme expliqué dans ce document, dans un réseau privé physique, les différents sites ou noeuds sont reliés par des circuits spécialisés, tandis que dans un réseau privé virtuel, chaque noeud est relié au commutateur local le plus proche du réseau public, où un logiciel approprié établit les liaisons à la demande. Deux variantes de réseau privé virtuel existent: on peut d'une part prévoir des liaisons semi-permanentes, qui sont établies sans numérotation, dès que l'un des noeuds a besoin du circuit, et qui relient toujours les deux mêmes points. Ce peut être notamment le cas pour des liaisons de signalisation, dans une application sur un réseau numérique à intégration de service. On peut d'autre part prévoir des liaisons commutées, qui ne peuvent être établies que par numérotation.

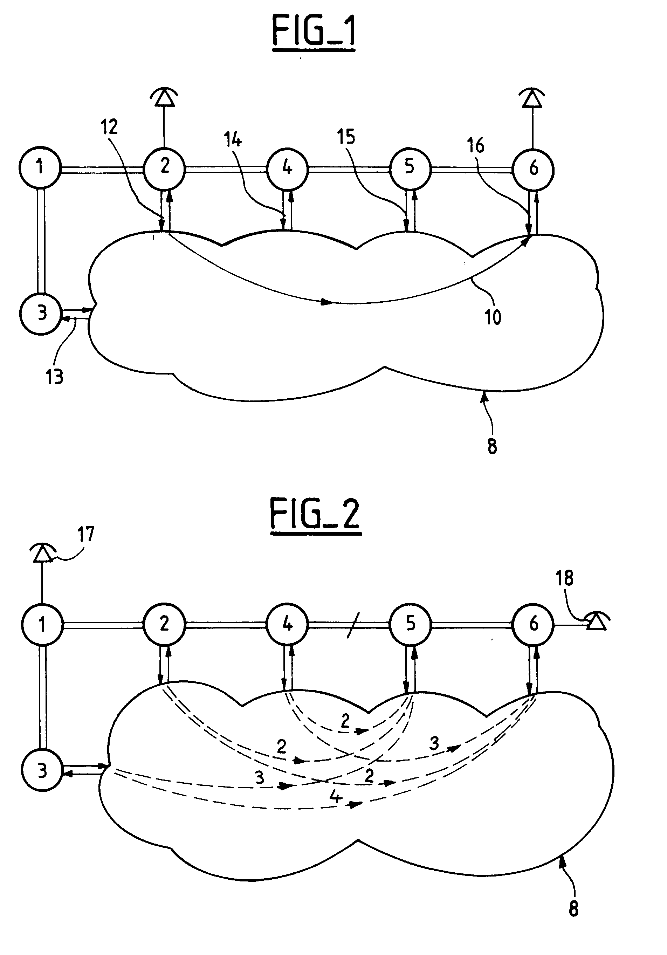

Dans la suite de la description, on considère des réseaux privés physiques ou virtuels, formés de noeuds reliés par des artères, qui peuvent être de tout type: des artères comprenant des liaisons dédiées, ou des artères formées en empruntant le un réseau externe; celui-ci peut être de type quelconque - le réseau public commuté, un réseau public mobile terrestre, un réseau numérique à intégration de service, un autre réseau privé, etc. La figure 1 montre un exemple d'un tel réseau privé. Ce réseau comprend à titre d'exemple des noeuds 1 à 6; les noeuds 2 à 6 sont reliés au réseau public 8 par des faisceaux 12 à 16. Les noeuds sont reliés entre eux par des artères formées de liaisons privées, représentées en gras sur la figure, ou comme dans le cas de l'artère entre les noeuds 5 et 6, par une artère ne comprenant qu'un canal de signalisation. Pour une artère numérique, chaque artère privée comprend au moins un accès, formé d'un canal de signalisation, et de plusieurs canaux B. Dans le cas de l'artère entre les noeuds 5 et 6 de la figure 1, l'artère comprend un canal de signalisation, mais pas de canal B; ce peut typiquement être le cas pour un noeud correspondant à une agence, pour laquelle le volume de trafic n'est pas très important.

Pour les réseaux privés se pose le problème du débordement; i. e. le problème d'une demande de communication qui ne peut pas être satisfaite par le réseau, du fait d'une saturation des ressources. Ceci peut advenir dès lors que les artères privées du réseau privé présentent une capacité fixe, et non allouée dynamiquement, qui est inférieure au volume maximal du trafic possible. Il est connu d'assurer la communication correspondante, en empruntant le réseau public. En d'autres termes, si un abonné du noeud 2 cherche à joindre un abonné du noeud 6, et si le réseau privé est saturé et ne peut pas assurer la communication, la communication est assurée à travers les faisceaux 12 et 16 et le réseau public. Ceci peut être le cas, par exemple si l'artère entre les noeuds 2 et 4 est saturée. Sur la figure 1, la référence 10 montre schématiquement une telle communication transitant par le réseau public. Un débordement peut aussi être nécessaire si l'artère en cause ne dispose pas de canal B, comme dans le cas du noeud 6 de la figure 1.

Cette solution pose les problèmes suivants. D'une part, le recours au réseau public a un coût; d'autre part, il n'est pas certain qu'il existe un faisceau d'accès au réseau public pour tous les noeuds; dans l'exemple de la figure 1, le noeud 1 ne présente pas de faisceau permettant l'accès au réseau public, de la sorte qu'un appel passant par le réseau public pourrait être routé à travers le faisceau 12 du noeud 2 ou le faisceau 13 du noeud 3.

L'invention propose une solution à ces problèmes; elle permet de gérer les débordements du réseau privé, en minimisant les coûts d'accès au réseau au réseau public, et en maximisant l'utilisation des ressources du réseau privé. Elle s'applique non seulement pour les débordements vers le réseau public, mais plus généralement pour les débordements vers tous les types de réseaux externes au réseau privé: réseau public commuté, réseau public mobile terrestre ou satellite, autre réseau privé, etc.

Pour cela, l'invention propose un procédé de routage d'un appel dans un réseau privé, avec débordement vers un autre réseau, comprenant le calcul des différents routes permettant d'établir l'appel, avec un ou plusieurs débordements vers l'autre réseau, et le choix d'une route en fonction du coût des débordements et du nombre de débordements.

Dans un mode de réalisation, l'étape de choix s'effectue parmi les routes présentant un nombre de débordements inférieur à une valeur de seuil prédéterminée.

Cette valeur de seuil prédéterminée est avantageusement choisie en fonction de la durée maximale d'établissement de l'appel. Dans un mode de réalisation, elle vaut 3.

De préférence, l'étape de choix s'effectue de sorte à minimiser un vecteur de coût du routage de l'appel, ce vecteur de coût présentant une composante de taxe encourue du fait des débordements et une composante de charge des artères du réseau privé.

On peut prévoir qu'un premier vecteur est inférieur à un second vecteur si la composante de coût du premier vecteur est inférieure à la composante de coût du second vecteur, et en cas d'égalité des composantes de coût, si la composante de charge du premier vecteur est inférieure à la composante de charge du deuxième vecteur.

Avantageusement, le vecteur somme d'un premier et d'un deuxième vecteurs est défini comme le vecteur dont chaque composante est la somme des composantes correspondantes des premiers et second vecteurs.

Dans un mode de réalisation, l'étape de calcul des différentes routes s'effectue par application de l'algorithme de Dijkstra, en prenant en compte le nombre de débordements.

On peut prévoir une étape de calcul du nombre minimal de débordements entre un noeud du réseau privé et le noeud destinataire de l'appel, par application de l'algorithme de Dijkstra.

Dans ce cas, lors d'une itération de l'algorithme de Dijkstra, un noeud est de préférence ignoré si la somme du nombre de débordements jusqu'à ce noeud et du nombre minimal de débordements jusqu'au noeud destinataire de l'appel est supérieure à une valeur de seuil prédéterminée.

D'autres caractéristiques et avantages de l'invention apparaîtront à la lecture de la description qui suit de modes de réalisation de l'invention, donnée à titre d'exemple et en référence aux dessins annexés qui montrent:

- figure 1 une représentation schématique d'un réseau privé connu;
- figure 2 une représentation schématique d'un réseau privé dans lequel l'invention est mise en oeuvre;
- figure 3 un graphe de la composante de charge du vecteur de coût selon l'invention;
- figure 4 une représentation schématique d'un autre réseau privé dans lequel l'invention est mise en oeuvre.

L'invention propose, dans un réseau privé, de ne pas procéder à un débordement systématique de bout en bout lorsque la communication ne peut pas être assurée, mais de ne procéder à un débordement que sur certaines artères, et de préférence uniquement sur les artères qui sont effectivement saturées. Dans la mesure où la durée d'établissement de la liaison dépend du nombre de sauts ou de débordements vers le réseau externe, noté dans la suite Saut; l'invention propose aussi, pour améliorer la durée nécessaire à l'établissement de la communication, de ne permettre qu'un nombre limité de débordements, noté dans la suite Smax.

La figure 2 montre de nouveau une représentation schématique d'un réseau privé, analogue à celle de la figure 1; sur la figure 1 sont aussi représentées des liaisons avec débordement selon l'invention. La structure du réseau de la figure 1 est identique à celle du réseau de la figure et comporte les mêmes numéros de référence. On considère dans la suite de la description, à titre d'exemple, les débordements vers le réseau public.

L'invention propose de calculer les différentes routes permettant d'établir l'appel et de choisir l'une de ces routes en fonction du coût des débordements Cost et du nombre Saut de débordements envisagés. Pour modéliser le coût des débordements, l'invention propose d'utiliser un vecteur de coût Cost présentant deux composantes TaxCost et LoadCost:

$$\text{Cost} := (\text{TaxCost}; \text{LoadCost})$$

La première composante TaxCost est représentative de la taxe encourue du fait des débordements, et est décrite plus en détail dans la suite; la deuxième composante LoadCost est une composante de charge des artères du réseau privé. On tient donc compte à la fois de la taxation du débordement par l'opérateur du réseau, et aussi de l'occupation des ressources du réseau privé. Pour un routage possible d'un appel, le vecteur de coût est défini par itération, en sommant les vecteurs de coût définis sur chacune des artères et chacun des débordements constituant le routage envisagé. On définit donc uniquement le vecteur de coût entre deux noeuds ainsi que la fonction de somme des deux vecteurs. Celle-ci peut simplement être la somme classique dans l'espace vectoriel correspondant, i. e. le vecteur somme a pour composantes les sommes des composantes respectives des vecteurs sommés:

$$\text{Cost1} + \text{Cost2} := (\text{TaxCost1} + \text{TaxCost2}; \text{LoadCost1} + \text{LoadCost2})$$

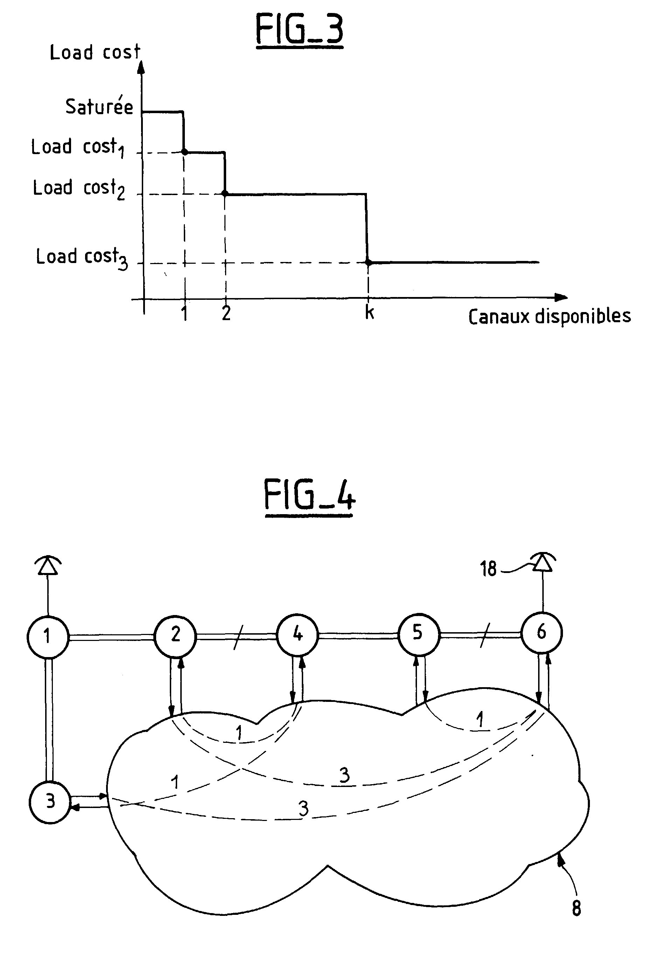

La figure 3 montre une allure possible de la deuxième composante LoadCost, représentative de la charge d'une artère du réseau privé. Cette deuxième composante est par définition nulle dans le cas d'un débordement; il est aussi possible de prévoir que la deuxième composante est non nulle pour tenir compte de la charge des faisceaux permettant le débordement. Elle peut pour une artère du réseau privé, présenter l'allure visible sur la figure 3: la figure montre essentiellement que la charge est une fonction réelle d'une variable réelle qui est le nombre de canaux libres sur l'artère, qui est décroissante. La fonction est en paliers sur la figure, mais pour les calculs, seuls importent les valeurs de la fonctions pour des valeurs entières du nombre de canaux libres. Pour le cas d'un réseau de type RNIS, dans lequel l'artère est formée d'une pluralité d'accès T0 ou T2, est portée en abscisses le nombre de canaux B libre. Par définition, la charge présente une valeur infinie - i.e. une valeur supérieure à toute autre - si l'artère est coupée. Elle présente une valeur "saturée" si aucun canal n'est disponible; cette valeur "saturée" est choisie de sorte à être supérieure à la somme de tous les coûts possibles d'un routage par des canaux B. Elle présente une première valeur LoadCost1 si un seul canal est disponible, une deuxième valeur LoadCost2 si de 2 à k canaux sont disponibles, k étant un entier, et une valeur LoadCost3 = 1 si plus de k canaux sont disponibles, avec LoadCost1 >. LoadCost2. Une valeur de k de l'ordre de 10 est appropriée; le choix d'une valeur de k relativement faible permet d'éviter de recalculer les routages, tant que le coût ne varie pas. D'autres valeurs sont possibles, notamment en fonction de la capacité d'une artère et du nombre de canaux occupés par une communication. Le choix des valeurs LoadCost1 et LoadCost2, comme le choix des valeurs de charge pour lesquelles la fonction change de valeurs dépend de la nature du réseau, et du répartition de charge qui est souhaitée.

La première composante TaxCost du vecteur de coût est définie de la façon suivante; pour une artère du réseau, la composante est nulle par hypothèse; pour un débordement, la composante est fixée par l'administrateur du réseau privé, par exemple en fonction de la taxe prélevée par l'opérateur et de la durée moyenne des appels.

On peut aussi choisir un vecteur de coût qui tienne compte non seulement de l'artère, mais dans le cas d'un débordement des faisceaux permettant l'accès au réseau externe. Dans ce cas, la charge LoadCost pourrait être la valeur la plus grande des charges des faisceaux utilisés pour le saut ou débordement, la composante TaxCost du vecteur de coût étant paramétrée comme indiqué plus haut. Cette solution permet de prendre en compte non seulement l'encombrement de l'artère, mais aussi dans le cas d'un débordement, l'encombrement des faisceaux.

Il convient, pour pouvoir comparer le coût de deux routages d'un appel, de définir un ordre dans l'espace des vecteurs de coût. Cet ordre peut par exemple être défini de la façon suivante:

$$\text{Cost1} < \text{Cost2 si TaxCost1 ? TaxCost2 et TaxCost1} < \text{TaxCost2}$$

avec

$$\text{Cost1} < \text{Cost2 si TaxCost1} = \text{TaxCost2 et LoadCost1} < \text{LoadCost2}$$

Cette définition permet de minimiser le coût des débordement, et à coût égal, de maximiser l'utilisation du réseau privé. On pourrait changer l'ordre pour satisfaire des objectifs différents.

Ces définitions permettent un calcul des différents routages possibles, et une comparaison des différents routages pour en choisir un. L'invention propose encore d'utiliser l'algorithme de Dijkstra pour déterminer un routage de l'appel qui minimise le vecteur de coût défini plus haut, en tenant compte de la limitation au nombre de débordements. Dans l'application de cet algorithme à la présente invention, les noeuds du graphe sont formés des noeuds du réseau privé. Les trajets entre les noeuds sont formés des artères du réseau privé, ou en cas de débordement possible, des débordements par le réseau public. La distance est le vecteur de coût défini plus haut, et la relation d'ordre classique dans les réels est remplacée dans l'application de l'algorithme par la relation d'ordre définie elle aussi plus haut.

On commence par appliquer l'algorithme de Dijkstra au réseau, sans tenir compte de la limitation au nombre de débordement autorisés. On obtient ainsi pour un couple appelant appelé, ou plus exactement pour un couple noeud appelant - noeud appelé, un plus court routage, au sens de l'ordre défini sur les vecteurs de coût. Si le routage obtenu satisfait la condition sur le nombre maximal de débordements, on a déterminé un routage optimal, qui peut être utilisé.

Si le routage proposé ne satisfait pas la condition sur le nombre de débordements, i. e. si le nombre de débordement est supérieur au nombre maximal de débordements autorisés Smax, on peut procéder de la façon suivante. On commence par calculer pour les noeuds du réseau privé le nombre minimal Sautr(n, d) de débordements entre deux noeuds. Ceci peut s'obtenir par application de l'algorithme de Dijkstra, en partant du noeud destinataire et en considérant le graphe formé par les noeuds du réseau privé, avec une valuation de 1 pour les débordements et une valuation de 0 pour les artères du réseau privé.

On procède ensuite comme dans l'algorithme de Dijkstra, en l'adaptant pour tenir compte du nombre de débordements, et pour utiliser le coût Cost défini plus haut. Lors de l'initialisation, on met dans S le noeud s, et dans $\bar{S}$ tous les autres noeuds, avec pour les i noeuds de $\Gamma_s$ :

Cost(s, i) := le coût de l'artère entre s et i;
le noeud parent de i est s;
Saut(s, i) := 0, si l'artère entre s et i fait partie du réseau privé, et 1 en cas de débordement entre s et i, avec 1
et pour les autres noeuds j de $\bar{S}$:
Cost(s, j) := ∞;
pas de noeud parent de j;
Saut(s, i) := ∞;

Lors d'une itération de l'algorithme, on procède de la façon suivante; après avoir retiré de $\bar{S}$ le noeud n le plus proche du noeud source, on vérifie si :

$$\text{Saut}(s, n) + \text{Saut}_r(n, d) \leq \text{Smax}$$

Si tel n'est pas le cas, on sait que le routage entre s et d ne peut pas passer par le noeud n, et qu'il n'existe pas de chemin entre s et d satisfaisant la contrainte sur le nombre de sauts. Si au contraire,

$$\text{Saut}(s, n) + \text{Saut}_r(n, d) \leq \text{Smax}$$

on peut ajouter le noeud n dans S.

Cette modification de l'algorithme de Dijkstra est une des solutions pour trouver selon l'invention un plus court chemin au sens du coût défini plus haut, tout en satisfaisant les contraintes sur le nombre de débordements ou sauts.

En outre, l'invention propose d'améliorer encore les résultats de l'algorithme de la façon suivante. Lors d'une itération, on considère les voisins du noeud que l'on vient d'ajouter dans le sous graphe S, et on vérifie si ces noeuds peuvent devenir plus proche du noeud s en passant par le noeud n, et en satisfaisant la contrainte sur le nombre de sauts. En d'autres termes, pour tout noeud v de Gn appartenant à , on calcule

$$\text{Saut}_n(s, v) + \text{Saut}_r(n, d)$$

avec $\text{Saut}_n(s, v)$ le nombre de sauts entre s et v en passant par n. Si cette quantité est strictement supérieure à Smax, on ne fait rien. Si au contraire

$$\text{Saut}_n(s, v) + \text{Saut}_r(n, d) \leq \text{Smax}$$

on vérifie si

$$\underline{\text{Cost}}(s, n) + \underline{\text{Cost}}(n, v) < \underline{\text{Cost}}(s, v)$$

Si tel est le cas, le noeud v peut devenir plus proche en passant par le noeud n. On met alors à jour

$$\underline{\text{Cost}}(s, v) := \underline{\text{Cost}}(s, n) + \underline{\text{Cost}}(n, v)$$

le noeud parent de v, qui devient n, et

Saut(s, v) := Saut(s, n), si l'artère entre n et v fait partie du réseau privé, et Saut(s, n) + 1, si le passage de n à v implique un débordement.

Cette adaptation de l'algorithme de Dijkstra permet de trouver, s'il existe, un routage optimal, i. e. qui minimise le vecteur de coût au sens de l'ordre défini plus haut. Elle permet, si le noeud d se trouve ajouté dans l'ensemble S, de trouver un routage entre s et d.

Ceci se démontre, en considérant l'algorithme dans un état donné, où n est le sommet du sous graphe . Supposons qu'il existe un autre chemin plus court conduisant de s à n, par des noeuds qui ne font pas partie de S. Soit p le premier noeud de ce chemin qui ne fait pas partie de S. Le coût p.Cost de s à n en passant par le noeud p s'écrit :

$$p.\text{Cost} = \underline{\text{Cost}}(s, p) + \underline{\text{Cost}}(p, n)$$

Par définition de n, on a

$$\underline{\text{Cost}}(s, p) \geq \underline{\text{Cost}}(s, n)$$

et comme $\underline{\text{Cost}}(p, n) \geq 0$, on a

$$p.\text{Cost} \geq \underline{\text{Cost}}(s, p) \geq \text{Cost}(s, n)$$

Il ne peut donc pas exister de chemin plus court. Si une solution existe, il reste à prouver qu'elle satisfait la contrainte sur le nombre de sauts ou débordements. Pour tout noeud x dans le sous graphe S,

$$\text{Saut}(s, x) + \text{Saut}_r(x, d) \leq \text{Smax}$$

du fait de la condition testée lors de chaque itération. S'il existe une solution pour la destination d, les itérations sont poursuivies jusqu'à ce que d se trouve dans l'ensemble S, et donc que

$$\text{Saut}(s, d) + \text{Saut}_r(d, d) \le \text{Smax}$$

ce qui fournit le résultat car $\text{Saut}_r(d, d)$ est nul.

Il est toutefois possible que le nombre maximal de débordements soit nécessairement atteint pour tout routage de s à d; ceci apparaît alors lors de la première application de l'algorithme de Dijkstra, pour calculer le nombre minimal de débordements; le calcul de Sautr(s, d) permet de cesser les calculs s'ils ne peuvent pas fournir de chemin.

L'invention permet ainsi de trouver facilement et rapidement le routage optimal au sens de l'ordre défini plus haut. Dans le pire des cas, on applique trois fois l'algorithme de Dijkstra ou sa variante selon l'invention. On pourrait aussi utiliser d'autres algorithmes ou d'autres méthodes. Les performances de l'algorithme amènent à un résultat en un temps O(n2), avec n le nombre de noeuds du réseau privé. On peut utiliser, pour obtenir un résultat plus rapidement, des heuristiques telles que celle décrite à titre d'exemple. L'heuristique repose sur le fait qu'il n'est pas nécessaire de procéder à un nouveau calcul tant qu'il n'y a pas de modification de l'état d'un lien du réseau privé. On comprend dans ce cas l'intérêt que la fonction défini en référence à la figure 3 présente une valeur constante dès que le nombre de canaux libres dépasse une valeur donnée.

Toutefois, dans la mesure où les débordements dépendent des faisceaux d'accès au réseau public; on peut aussi procéder à un calcul pour chaque accès à un noeud qui ne peut être atteint que par débordements, ou encore pour toute modification des faisceaux d'accès au réseau public; ceci est notamment le cas si le vecteur de coût dépend des ressources au niveau des faisceaux, comme expliqué plus haut.. Dans un cas comme dans l'autre, l'invention permet de déterminer un routage optimal en un temps faible.

On arrive ainsi, dans un réseau privé présentant des canaux de signalisation, à fournir les services du réseau privé, et ce même si les artères sont saturées - pas de canaux B disponibles -. On peut alors utiliser le protocole de signalisation privé pour l'affichage du poste, l'identité de l'appelant, la messagerie texte, par exemple.

Dans l'exemple de la figure 2, on considère un appelant 17 du noeud 1, qui cherche à établir une communication vers un appelé 18 du noeud 6. Si l'artère entre les noeuds 4 et 5 est saturée, comme symbolisée sur la figure, l'invention propose de considérer les différents débordements possibles, avec les taxes donnés à titre d'exemple:

- du noeud 2 vers le noeud 5, taxe 2;
- du noeud 2 vers le noeud 6, taxe 2;
- du noeud 3 vers le noeud 5, taxe 3;
- du noeud 3 vers le noeud 6, taxe 4;
- du noeud 4 vers le noeud 5, taxe 2;
- du noeud 4 vers le noeud 6, taxe 3;

et de choisir le routage minimisant le vecteur de coût, comme expliqué plus haut. Dans l'exemple de la figure 2, on choisirait parmi les débordements entre les noeuds 2 et 5, 2 et 6 ou 4 et 5, en fonction de la charge, typiquement de la charge des faisceaux et des artères utilisées.

La figure 4 montre de nouveau une représentation schématique d'un réseau privé, analogue à celle de la figure 2. Dans l'exemple de la figure 4, les artères entre les noeuds 2 et 4 d'une part, et entre les noeuds 5 et 6 d'autre part, sont saturées. Dans ce cas, l'invention propose encore de considérer les différentes routes possibles, avec les débordements suivants:

- du noeud 2 vers le noeud 4, taxe 1;
- du noeud 2 vers le noeud 6, taxe 3;
- du noeud 3 vers le noeud 4, taxe 1;
- du noeud 4 vers le noeud 4, taxe 2;
- du noeud 5 vers le noeud 6, taxe 1;

De nouveau, on considère les routages de taxe totale 2,

- débordement du noeud 3 au noeud 4 et du noeud 5 au noeud 6;
- débordement du noeud 2 au noeud 4 et du noeud 5 au noeud 6;

entre lesquels on choisit en fonction de la charge, comme expliqué dans la relation d'ordre mentionnée plus haut.

Bien entendu, la présente invention n'est pas limitée aux exemples et modes de réalisation décrits et représentés, mais elle est susceptible de nombreuses variantes accessibles à l'homme de l'art. Elle s'applique à d'autres types de réseaux privés que ceux décrits en référence aux exemples.

Il est aussi clair que l'invention n'est pas limitée au mode de réalisation décrit dans lequel les débordement s'effectuent vers le même réseau public - le plus souvent le réseau public commuté. Elle s'applique aussi dans des exemples où le débordement peut s'effectuer à travers différents réseaux publics, par exemple le réseau public commuté, au moins un réseau public mobile terrestre, au moins un réseau public mobile par satellite, etc. Des débordements peuvent alors être prévus vers des réseaux différents, notamment en appliquant l'algorithme de routage décrit plus haut. Dans ce cas, les mots "le réseau public", employés par opposition au "réseau privé", couvrent l'ensemble des différents réseaux pouvant être utilisés pour le routage d'un appel.

On a considéré dans la description la limitation du nombre de sauts ou de débordements. Le procédé de routage de l'invention s'applique aussi pour d'autres types de contraintes, et par exemple pour limiter le temps de transit ou de propagation sur une communication donnée. Ceci est particulièrement adapté aux réseaux de données.

Enfin, la description et les revendications mentionnent l'algorithme de Dijkstra. Il est entendu que ce terme couvre non seulement la version de l'algorithme de plus court chemin proposée par Dijkstra, mais aussi les versions proches, et notamment l'algorithme de Bellman ou l'algorithme de Floyd. On notera que l'algorithme de Bellman ne s'applique que pour les graphes sans circuits.

**Revendications**

1. Procédé de routage d'un appel dans un réseau privé (1, 2, 3, 4, 5, 6), avec débordement vers un autre réseau (8), comprenant le calcul des différentes routes permettant d'établir l'appel, avec un ou plusieurs débordements vers l'autre réseau, et le choix d'une route en fonction du coût des débordements et du nombre de débordements.

2. Procédé selon la revendication 1, caractérisé en ce que l'étape de choix s'effectue parmi les routes présentant un nombre de débordements inférieur à une valeur de seuil prédéterminée.

3. Procédé selon la revendication 2, caractérisé en ce que la valeur de seuil prédéterminée est choisie en fonction de la durée maximale d'établissement de l'appel.

4. Procédé selon la revendication 2 ou 3, caractérisé en ce que la valeur prédéterminée vaut 3.

5. Procédé selon l'une des revendications 1 à 4, caractérisé en ce que l'étape de choix s'effectue de sorte à minimiser un vecteur de coût du routage de l'appel, ce vecteur de coût présentant une composante de taxe encourue du fait des débordements et une composante de charge des artères du réseau privé.

6. Procédé selon la revendication 5, caractérisé en ce qu'un premier vecteur est inférieur à un second vecteur si la composante de coût du premier vecteur est inférieure à la composante de coût du second vecteur, et en cas d'égalité des composantes de coût, si la composante de charge du premier vecteur est inférieure à la composante de charge du deuxième vecteur.

7. Procédé selon la revendication 5 ou 6, caractérisé en ce que le vecteur somme d'un premier et d'un deuxième vecteurs est défini comme le vecteur dont chaque composante est la somme des composantes correspondantes des premiers et second vecteurs.

8. Procédé selon l'une des revendications 1 à 7, caractérisé en ce que l'étape de calcul des différentes routes s'effectue par application de l'algorithme de Dijkstra, en prenant en compte le nombre de débordements.

9. Procédé selon la revendication 8, caractérisé en ce qu'il comprend une étape de calcul du nombre minimal de débordements entre un noeud du réseau privé et le noeud destinataire de l'appel, par application de l'algorithme de Dijkstra.

10. Procédé selon la revendication 9, caractérisé en ce que lors d'une itération de l'algorithme de Dijkstra, un noeud est ignoré si la somme du nombre de débordements jusqu'à ce noeud et du nombre minimal de débordements jusqu'au noeud destinataire de l'appel est supérieure à une valeur de seuil prédéterminée.

# FIG_1

# FIG_2

# FIG_3

Load cost

Saturée

Load cost$_1$

Load cost$_2$

Load cost$_3$

1  2  k

Canaux disponibles

# FIG_4

EP 0 979 012 A1

**RAPPORT DE RECHERCHE EUROPEENNE**

Office européen
des brevets

Numéro de la demande

EP 99 40 1667

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DE 196 14 926 A (PHILIPS PATENTVERWALTUNG GMBH) 23 octobre 1997 (1997-10-23) | 1,5 | H04Q3/66 H04Q3/62 |
| A | * le document en entier * | 2-4,6,7 | |
| A | N. SHAYE: "Private Interconnect Networks Overview" GTE AUTOMATIC ELECTRIC WORLD-WIDE COMMUNICATIONS JOURNAL, vol. 20, no. 1, 1982, pages 2-12, XP002101198 Northlake (US) * page 4, colonne de droite, ligne 1 - page 5, colonne de gauche, ligne 20 * | 1 | |
| A | US 5 274 643 A (FISK) 28 décembre 1993 (1993-12-28) * colonne 3, ligne 7 - colonne 7, ligne 7 * | 1 | |
| A | GB 2 300 089 A (EUROTEL TELECOM LTD) 23 octobre 1996 (1996-10-23) * page 2, ligne 25 - page 7, ligne 18 * * page 9, ligne 2 - ligne 10 * * page 11, ligne 7 - ligne 28 * * page 12, ligne 3 - page 13, ligne 3 * | 1 | DOMAINES TECHNIQUES RECHERCHES (Int.Cl.7) H04Q |
| A | EP 0 798 942 A (GPT LIMITED) 1 octobre 1997 (1997-10-01) * le document en entier * | 1 | |
| A | WERNER W: "WIRTSCHAFTLICHKEIT ALS OBERSTES GEBOT" TELCOM REPORT, vol. 19, no. 4, 1996, pages 23-25, XP000629281 * page 24, colonne de droite, ligne 7 - page 25, colonne de gauche, ligne 27 * | 1-8 | |

Le présent rapport a été établi pour toutes les revendications

| Lieu de la recherche | Date d'achèvement de la recherche | Examinateur |
|---|---|---|
| LA HAYE | 1 septembre 1999 | De Muyt, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**Office européen des brevets**

**RAPPORT DE RECHERCHE EUROPEENNE**

Numéro de la demande

EP 99 40 1667

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | TORRIERI D: "ALGORITHMS FOR FINDING AN OPTIMAL SET OF SHORT DISJOINT PATHS IN A COMMUNICATION NETWORK" IEEE TRANSACTIONS ON COMMUNICATIONS, vol. 40, no. 11, 1 novembre 1992 (1992-11-01), pages 1698-1702, XP000336308 * le document en entier * | 1,8-10 | |
| A | CHIA-JIU WANG ET AL: "THE USE OF ARTIFICIAL NEURAL NETWORKS FOR OPTIMAL MESSAGE ROUTING" IEEE NETWORK: THE MAGAZINE OF COMPUTER COMMUNICATIONS, vol. 9, no. 2, 1 mars 1995 (1995-03-01), pages 16-24, XP000493486 * page 23, colonne de gauche, ligne 14 - colonne de droite, ligne 8 * | 1,8-10 | |
| A,P | EP 0 868 097 A (SIEMENS AKTIENGESELLSCHAFT) 30 septembre 1998 (1998-09-30) * le document en entier * | 1-10 | DOMAINES TECHNIQUES RECHERCHES (Int.Cl.7) |
| A,P | EP 0 868 099 A (SIEMENS AKTIENGESELLSCHAFT) 30 septembre 1998 (1998-09-30) * le document en entier * | 1-10 | |

Le présent rapport a été établi pour toutes les revendications

| Lieu de la recherche | Date d'achèvement de la recherche | Examinateur |
|---|---|---|
| LA HAYE | 1 septembre 1999 | De Muyt, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 1667

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-09-1999

| Document brevet cité au rapport de recherche | | Date de publication | Membre(s) de la famille de brevet(s) | | Date de publication |
|---|---|---|---|---|---|
| DE 19614926 | A | 23-10-1997 | EP | 0839431 A | 06-05-1998 |
| | | | WO | 9739592 A | 23-10-1997 |
| US 5274643 | A | 28-12-1993 | AUCUN | | |
| GB 2300089 | A | 23-10-1996 | AU | 707903 B | 22-07-1999 |
| | | | AU | 5341896 A | 07-11-1996 |
| | | | CA | 2218687 A | 24-10-1996 |
| | | | EP | 0823182 A | 11-02-1998 |
| | | | WO | 9633583 A | 24-10-1996 |
| EP 798942 | A | 01-10-1997 | GB | 2311687 A | 01-10-1997 |
| EP 868097 | A | 30-09-1998 | DE | 19745251 A | 01-10-1998 |
| EP 868099 | A | 30-09-1998 | AUCUN | | |

EPO FORM P0460

Pour tout renseignement concernant cette annexe : voir Journal Officiel de l'Office européen des brevets, No.12/82